(19) Europäisches Patentamt / European Patent Office / Office européen des brevets

(11) **EP 2 759 784 A1**

(12) **DEMANDE DE BREVET EUROPEEN**

(43) Date de publication:
**30.07.2014 Bulletin 2014/31**

(51) Int Cl.:
*F25B 9/00* *(2006.01)*  *F25B 49/02* *(2006.01)*
*G05B 17/00* *(2006.01)*  *G05B 17/02* *(2006.01)*

(21) Numéro de dépôt: **14152692.1**

(22) Date de dépôt: **27.01.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.01.2013 FR 1350749**

(71) Demandeur: **COMMISSARIAT A L'ENERGIE ATOMIQUE ET AUX ENERGIES ALTERNATIVES**
**75015 Paris (FR)**

(72) Inventeurs:
• **Bonne, François**
  **38000 GRENOBLE (FR)**
• **Bonnay, Patrick**
  **38500 VOIRON (FR)**

(74) Mandataire: **Novaimo**
**Bâtiment Europa 2**
**310 avenue Marie Curie**
**Archamps Technopole**
**74166 Saint Julien en Genevois Cedex (FR)**

(54) **Procede de configuration d'un dispositif de commande d'un systeme thermodynamique**

(57) Procédé de configuration d'un dispositif de commande d'un système thermodynamique, en particulier thermohydraulique, notamment d'un système de cryoréfrigérateur, comprenant les phases suivantes :
• Mise en oeuvre d'un procédé de détermination d'un modèle du système thermodynamique, comprenant une décomposition du système en sous-systèmes ayant chacun des conditions aux limites, tel que:
- des conditions aux limites de sortie, respectivement d'entrée, d'un sous-système sont reliées à des conditions aux limites d'entrée, respectivement de sortie, d'un sous-système voisin,
- les conditions aux limites portent au moins sur une quantité de fluide par unité de temps et sur un couple de grandeurs physiques définissant l'état thermodynamique du fluide;

• Génération d'un observateur en utilisant le modèle déterminé dans la phase précédente.

EP 2 759 784 A1

**Description**

La présente invention concerne le domaine de la modélisation des systèmes. En particulier, l'invention concerne un procédé d'obtention ou de détermination d'un modèle d'un système thermodynamique. L'invention concerne aussi un procédé de configuration d'un dispositif de commande d'un système thermodynamique. L'invention porte encore sur un support d'enregistrement lisible par un processeur sur lequel sont enregistrées des données définissant un tel modèle. L'invention porte encore sur un dispositif de commande d'un tel système thermodynamique. L'invention porte enfin sur un système comprenant un tel dispositif.

Plus exactement, l'invention concerne la génération de gains et de structures d'observateurs pour estimer une charge thermique stationnaire ou in-stationnaire s'appliquant sur le bain de liquide cryogène d'un cryoréfrigérateur, par exemple un bain d'hélium. L'utilité d'un observateur d'une telle charge thermique est de permettre de gérer des fonctionnements dynamiques de systèmes.

Pour obtenir des performances maximales, ou encore obtenir des preuves formelles de stabilité (intéressant dans le cadre d'une utilisation de machine dont le fonctionnement est critique), il est nécessaire de concevoir des structures et des gains d'observation à partir de modèles, éventuellement paramétrés. Ces modèles peuvent être obtenus par exemple par une méthode appelée « identification » et basée sur l'existence de données expérimentales. L'utilisateur du système doit générer un scénario qui lui permet de récupérer des données d'expérimentation. Ces données sont ensuite traitées grâce à des algorithmes spécifiques, lesquels permettent d'obtenir un modèle utilisable dans une stratégie d'observation. Cette méthode a l'inconvénient de nécessiter que le système existe concrètement, c'est-à-dire qu'il soit construit, disponible et en fonctionnement. Il n'est donc pas possible d'émettre des spécifications ou de concevoir des observateurs *a priori.*

Dans le document FR2943768, un procédé d'estimation d'un chauffage est proposé. Le procédé repose sur l'utilisation d'un observateur utilisant uniquement des variables considérées importantes parmi deux sous-systèmes utilisés en cryogénie, un séparateur de phase et une vanne de détente Joule-Thompson. Le modèle servant à l'observation est obtenu par identification, autrement dit, après une sélection des variables (ou de multiplication de variables) comportant de l'information susceptible d'être utilisée pour l'observation, un algorithme d'identification est chargé de construire un modèle numérique reliant l'évolution de ces variables, les unes en fonction des autres.

Ainsi, ce procédé comporte plusieurs désavantages:

- Il ne peut être conçu (et de surcroît exécuté) qu'a posteriori, l'algorithme d'identification utilisant des scénarios ayant déjà eu lieu sur la machine,
- Il ne prend en compte que certaines non-linéarités supposées a priori par le concepteur. Certains couplages peuvent donc êtres omis.

Il est connu d'utiliser un modèle physique pour décrire le comportement d'un système. Malheureusement, un tel modèle peut présenter une complexité qui ne permet pas la synthèse de correcteurs ou d'observateurs. Les modèles proposés ne sont également pas tous linéarisables du fait de la présence de tests. Ces modèles n'explicitent pas non plus le sens de propagation de toutes les conditions aux limites qui leurs sont appliquées. Certains sont des modèles qui reflètent seulement l'état stationnaire.

Le but de l'invention est de fournir un procédé de détermination d'un modèle d'un système thermodynamique et permettant de remédier aux problèmes évoqués précédemment et améliorant les procédés de détermination connus de l'art antérieur. En particulier, l'invention propose un procédé de détermination ne nécessitant pas une réalisation concrète d'un système et donc ne nécessitant pas de réaliser des mesures sur un tel système en fonctionnement, ces mesures risquant de plus d'être entachées d'erreurs. L'invention porte aussi sur un support d'enregistrement. L'invention porte encore sur un dispositif de commande d'un système thermodynamique. L'invention porte enfin sur un système comprenant un tel dispositif.

Selon l'invention, le procédé de détermination d'un modèle d'un système thermodynamique, en particulier thermohydraulique, notamment d'un système de cryoréfrigérateur, comprend une décomposition du système en sous-systèmes ayant chacun des conditions aux limites. De plus, des conditions aux limites de sortie, respectivement d'entrée, d'un sous-système sont reliées à des conditions aux limites d'entrée, respectivement de sortie, d'un sous-système voisin et les conditions aux limites portent au moins sur une quantité de fluide par unité de temps et sur un couple de grandeurs physiques définissant l'état thermodynamique du fluide.

Le couple de grandeurs physiques peut comprendre la température du fluide et/ou la pression du fluide.

On peut utiliser des modèles physiques des sous-systèmes basés sur le fonctionnement de chaque sous-système.

On peut mettre en oeuvre une étape de linéarisation des modèles physiques des sous-systèmes.

On peut mettre en oeuvre une étape d'initialisation des modèles physiques des sous-systèmes à un point de fonctionnement du système, notamment à un point de fonctionnement stationnaire du système.

On peut mettre en oeuvre une étape de détermination du modèle du système par combinaison des modèles des sous-systèmes.

L'invention porte aussi sur un procédé de configuration d'un dispositif de commande d'un système thermodynamique, en particulier thermohydraulique, notamment d'un système de cryoréfrigérateur. Le procédé comprend les phases suivantes :

- Mise en oeuvre du procédé défini précédemment ;
- Génération d'un observateur en utilisant le modèle déterminé dans la phase précédente.

L'invention porte aussi sur un procédé de commande d'un système thermodynamique, en particulier thermohydraulique, notamment d'un système de cryoréfrigérateur, comprenant l'utilisation d'un observateur généré par mise en oeuvre du procédé de configuration défini précédemment.

L'invention concerne encore un support d'enregistrement lisible par un processeur sur lequel sont enregistrées des données définissant un modèle d'un système thermodynamique, en particulier thermohydraulique, notamment d'un système de cryoréfrigérateur, le modèle étant obtenu par mise en oeuvre d'un procédé défini précédemment.

Selon l'invention, le dispositif de commande d'un système thermodynamique, en particulier thermohydraulique, notamment d'un système de cryoréfrigérateur, comprend des éléments matériels et/ou logiciels d'utilisation d'un modèle obtenu par la mise en oeuvre d'un procédé défini précédemment.

Les moyens matériels et/ou logiciels peuvent comprendre des éléments matériels et/ou logiciels de détermination d'au moins une commande par utilisation d'un modèle obtenu par la mise en oeuvre d'un procédé défini précédemment.

Les moyens matériels et/ou logiciels peuvent comprendre un support d'enregistrement défini précédemment, comme une mémoire.

Selon l'invention, le système thermodynamique, en particulier thermohydraulique, notamment un système de cryoréfrigérateur, comprend un dispositif de commande défini précédemment.

Les dessins annexés représentent, à titre d'exemple, un mode de réalisation d'un dispositif de surveillance selon l'invention.

La figure 1 est un schéma d'un premier mode de réalisation d'un système de cryoréfrigérateur selon l'invention.

La figure 2 est un schéma illustrant un modèle d'un élément du premier mode de réalisation du système de cryoréfrigérateur selon l'invention.

La figure 3 est un schéma d'un séparateur de phase du premier mode de réalisation du système de cryoréfrigérateur selon l'invention.

La figure 4 est un schéma d'une vanne du premier mode de réalisation du système de cryoréfrigérateur selon l'invention.

La figure 5 est un schéma d'un échangeur du premier mode de réalisation du système de cryoréfrigérateur selon l'invention.

La figure 6 est un ensemble de graphiques illustrant le fonctionnement du premier mode de réalisation du système de cryoréfrigérateur selon l'invention.

La figure 7 est un schéma d'un deuxième mode de réalisation d'un système de cryoréfrigérateur selon l'invention.

Les figures 8 et 9 sont des graphiques illustrant le fonctionnement du deuxième mode de réalisation du système de cryoréfrigérateur selon l'invention.

La figure 10 est un exemple de modèle de discrétisation spatiale d'un échangeur à contre-courant.

La figure 11 est un autre schéma du premier mode de réalisation d'un système de cryoréfrigérateur selon l'invention.

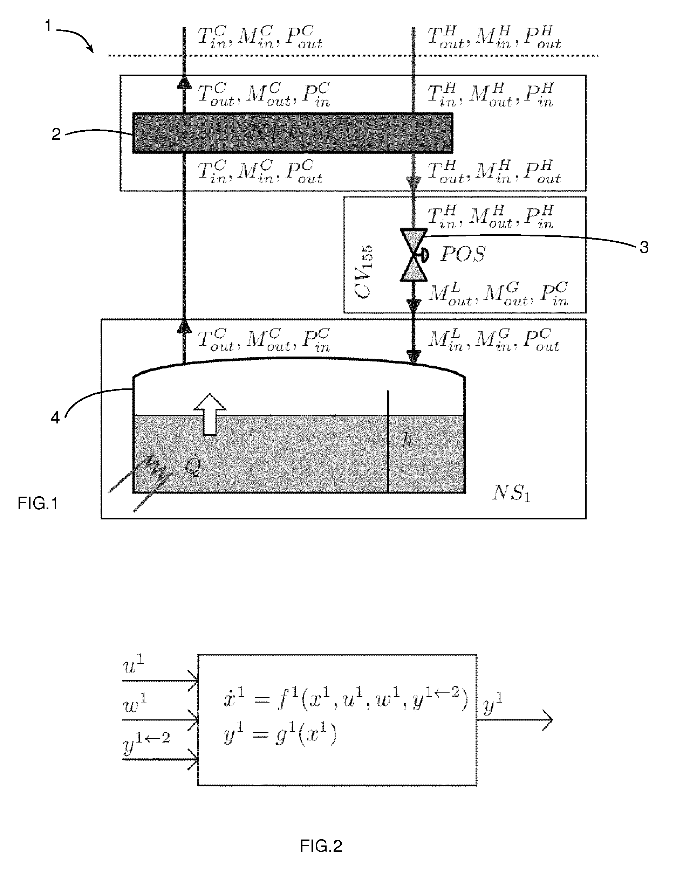

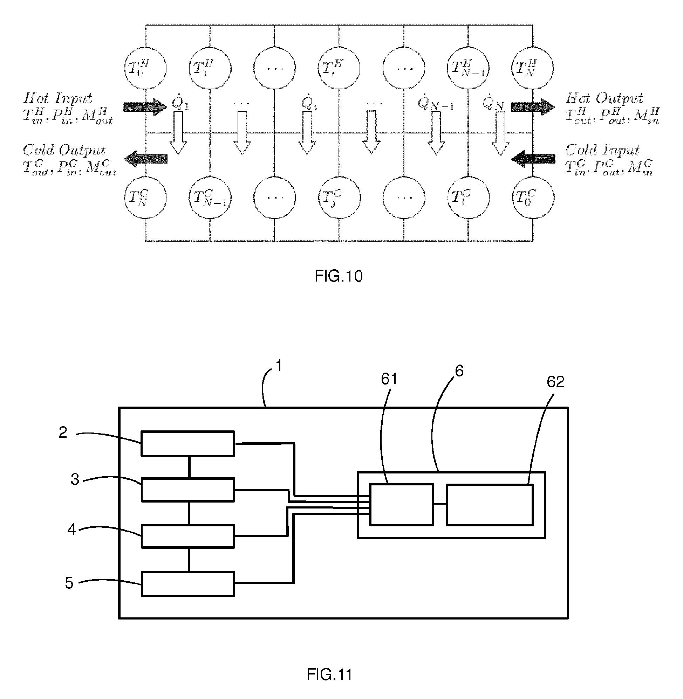

Un premier mode de réalisation d'un système thermodynamique est décrit ci-après en référence aux figures 1 et 11. Le système est par exemple un système thermohydraulique, notamment un système de cryoréfrigérateur. Le système comprend plusieurs sous-systèmes, par exemple un échangeur 2, par exemple un échangeur à contre-courant, une vanne 3, notamment une vanne de détente Joule-Thompson, un séparateur de phase 4 et éventuellement un ou plusieurs autres sous-système 5. Un fluide caloporteur parcourt ces différents sous-systèmes afin de permettre des échanges thermiques entre le système et au moins deux milieux extérieurs au système.

Le système comprend aussi un dispositif de commande 6. Le dispositif de commande permet de générer des ordres de commande d'au moins certains des sous-systèmes (certains des sous-systèmes comme l'échangeur peuvent ne pas être commandés), notamment des ordres de commande de positionnement de la vanne. Le dispositif de commande peut aussi comprendre des capteurs permettant de mesurer des paramètres de fonctionnement du système 1. De telles mesures peuvent aussi être utilisées par le dispositif de commande pour définir des ordres de commande.

Le dispositif de commande comprend des éléments 61, 62 matériels et/ou logiciels d'utilisation d'un modèle. Les éléments comprennent un microprocesseur 61 et un support d'enregistrement 62 lisible par le microprocesseur 61, notamment une mémoire. Pour déterminer des ordres de commande, le dispositif de commande utilise un modèle du système 1 mis en mémoire dans la mémoire 62. Ces ordres de commande peuvent être générés par le microprocesseur 62 au niveau de celui-ci. Le modèle du système est, de préférence, défini par mise en oeuvre d'un procédé de détermination selon l'invention. Un mode de réalisation d'un tel procédé de détermination selon l'invention est décrit plus bas.

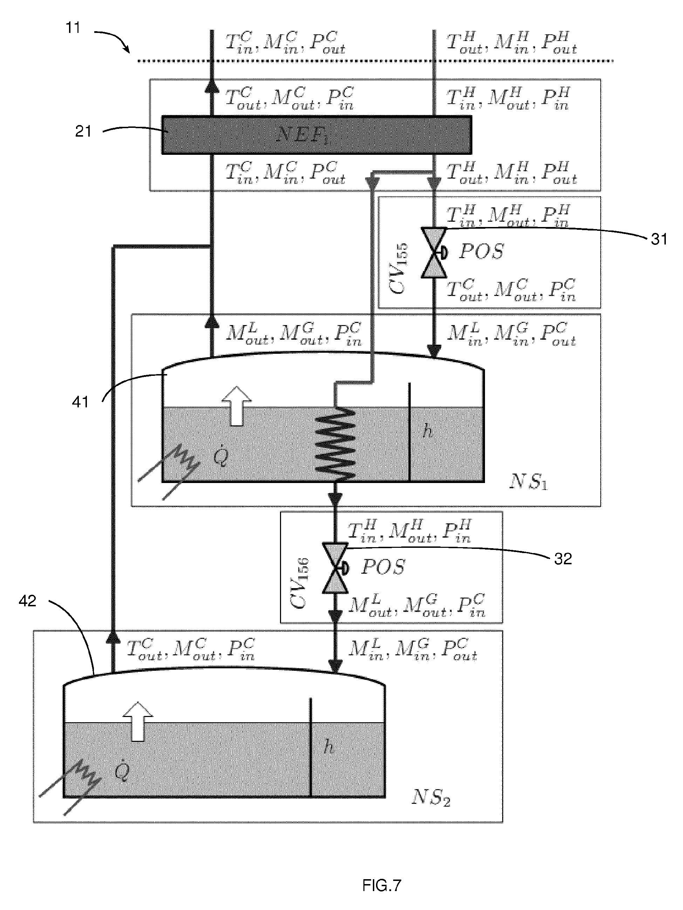

Un deuxième mode de réalisation d'un système thermodynamique est décrit ci-après en référence à la figure 7. Le deuxième mode de réalisation du système diffère par exemple du premier mode de réalisation du système en ce qu'il comprend en plus un deuxième séparateur de phase 42 et une deuxième vanne 32. Un deuxième échangeur se trouve dans le premier séparateur de phase 41. Le fluide caloporteur traverse le deuxième échangeur puis rejoint le deuxième séparateur de phase après avoir traversé la deuxième vanne 32.

Un mode d'exécution d'un procédé de détermination d'un modèle d'un système thermodynamique est décrit ci-après.

Il comprend une étape de décomposition du système en plusieurs sous-systèmes 2, 3, 4, 5 ; 21, 31, 41, 32, 42 ayant chacun des conditions aux limites.

Les conditions aux limites de sortie, respectivement d'entrée, d'un sous-système sont reliées à des conditions aux limites d'entrée, respectivement de sortie, d'un sous-système voisin, c'est-à-dire d'un sous-système avec lequel il est relié directement, en d'autres termes d'un sous-système vers lequel il envoie directement du fluide caloporteur ou d'un sous-système duquel il reçoit directement du fluide caloporteur.

Les conditions aux limites portent sur au moins une quantité de fluide par unité de temps, notamment un débit de fluide caloporteur, et sur un couple de grandeurs physiques définissant l'état thermodynamique du fluide, notamment une température du fluide et une pression du fluide.

Avantageusement, on utilise des modèles physiques des sous-systèmes basés sur le fonctionnement de chaque sous-système.

De préférence, on met en oeuvre une étape de linéarisation des modèles physiques des sous-systèmes.

On peut aussi avantageusement mettre en oeuvre une étape d'initialisation des modèles physiques des sous-systèmes à un point de fonctionnement du système, notamment à un point de fonctionnement stationnaire du système.

On obtient ensuite le modèle du système en combinant les différents modèles des sous-systèmes.

Ceci est illustré plus en détail ci-dessous.

Dans le mode d'exécution, il est proposé une approche par les équations physiques mais en prenant des conditions aux limites spéciales. De façon standard, le système est découpé en sous-systèmes dont le fonctionnement est plus simple à modéliser. Mais, contrairement à l'art antérieur où les variables et conditions aux limites sont choisies en fonction du sens d'écoulement du fluide dans le système, d'autres variables et des conditions aux limites telles qu'à chaque condition « entrante » d'un sous-système correspond une condition « sortante » du sous-système voisin ou juxtaposé et qu'il existe au moins un couple de grandeurs qui permette de définir l'état thermodynamique du fluide.

Le mode d'exécution est basé sur la construction d'un modèle mis en équations physiques. Le modèle fait donc intervenir uniquement les grandeurs physiques (chaleurs spécifiques, volumes, densités, surfaces, viscosité, chaleurs latentes, etc.) du procédé utilisé. Toutes ces données sont connues, ou peuvent être choisies *a priori*. Il s'agit donc d'établir un modèle de l'objet ou du système dont il est souhaitable d'observer la charge thermique.

Notamment, il est proposé d'obtenir des modèles mis en équations physiques pour estimer la charge thermique s'appliquant sur un bain de fluide caloporteur tel un bain d'hélium d'un cryoréfrigérateur. Pour ce faire, on peut proposer plusieurs observateurs basés sur le modèle, validé expérimentalement.

Ainsi, le procédé d'estimation repose non plus sur l'utilisation de données expérimentales, mais sur la connaissance physique du fonctionnement du système. Nous utiliserons ainsi toutes les relations utiles à la modélisation du système. En utilisant un modèle basé sur les équations physiques, en particulier toutes les non-linéarités connues du système sont naturellement prises en compte dans l'estimation de la charge thermique.

Il est impératif d'écrire des modèles dédiés au contrôle et à l'observation, reflétant uniquement les principales caractéristiques des sous-systèmes étudiés (de manière à limiter la complexité). Pour chaque sous-système, le sens de propagation des conditions aux limites est défini en prêtant attention à ce qu'elles soient compatibles entre sous-systèmes, pour les connecter par la suite (afin d'obtenir le modèle du système).

On choisit des modèles linéarisables. On choisit aussi des modèles initialisables à un point de fonctionnement.

En effet, pour la synthèse d'un observateur, les modèles doivent être initialisés autour d'un point de fonctionnement stationnaire. Cette étape est délicate puisque l'état stationnaire de chaque sous-système dépend de l'état des sous-systèmes qui lui sont connectés.

Par exemple, pour estimer les charges thermiques appliquées sur le bain de fluide caloporteur du système de la figure 1, un cryoréfrigérateur de 800W à 4.4K est considéré. On considère en particulier le cycle Joule-Thompson de ce système.

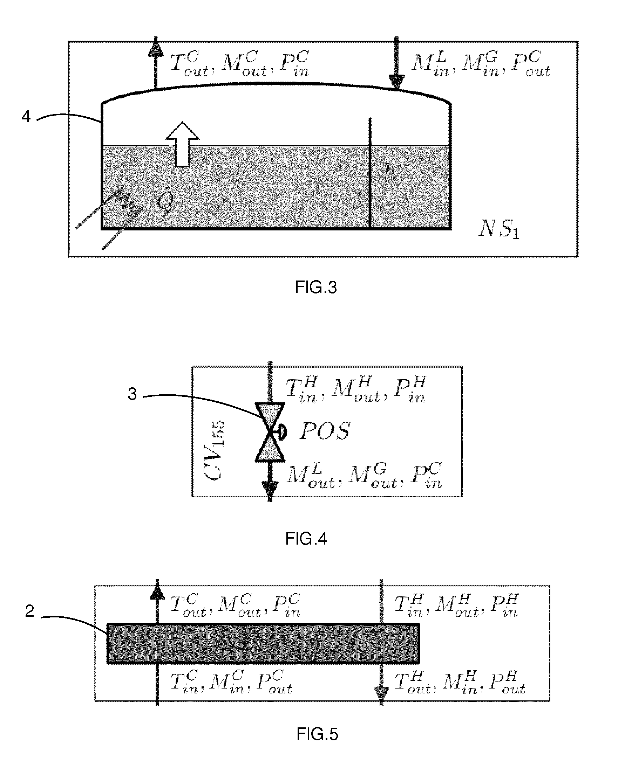

Comme représenté sur la figure 3 et comme vu plus haut, le système fonctionnant selon le cycle Joule-Thompson comprend une vanne de détente dite "vanne Joule-Thompson", un séparateur de phase, et un échangeur de chaleur à contre-courant. Dans le séparateur de phase, un dispositif de chauffage dissipant une puissance thermique permet de simuler des charges thermiques appliquées sur le bain.

Sur la figure 3 sont représentées les conditions aux limites qui ont été choisies pour modéliser les trois sous-systèmes que comprend le système. Chacun des sous-systèmes ayant chacun trois variables, par exemple une variable T (pour une température) et P (pour une pression) et M (pour un débit massique) (ou d'autres combinaisons des variables choisies parmi T, P, M, H ou enthalpie, p ou densité) ayant pour indice l'anglicisme « in », voit son système voisin avoir la même variable avec cette fois l'indice « out ». Certaines des conditions aux limites d'entrée des sous-systèmes sont utilisées normalement comme des conditions aux limites de sortie (et réciproquement), le choix de conditions aux limites permet d'assembler ou de combiner les sous-systèmes pour aboutir au modèle du système.

Avant d'écrire les modèles, que ce soit le modèle de l'ensemble du système ou les différents modèles des sous-systèmes, le vocabulaire qui sera utilisé est énoncé. La figure 2 représente un bloc contenant un modèle sous forme standard, avec des entrées et des sorties identifiables par le sens des flèches.

Le jeu d'entrées/sorties du sous-système 1 est ici mis en évidence:

- $u^1$ représente le vecteur d'entrée commandable (ou manipulable, celui sur lequel on peut agir),
- $x^1$ représente le vecteur d'état du modèle (les variables internes),

- $\dot{x}^1$ représente l'expression « la variation de $x^1$ » par rapport au temps $\left( \dot{x}^1 = \dfrac{\partial x^1}{\partial t} \right)$,

- $w^1$ représente le vecteur d'entrée non commandable (sur lequel on ne peut pas agir, il s'agit des conditions aux limites d'entrée du sous-système),
- $y^1$ représente le vecteur des sorties du système, il concatène les différentes variables auxquelles on s'intéresse, et les conditions aux limites de sortie (les sorties qui agissent directement sur les systèmes voisins)

Il doit être noté que chacun de ces vecteurs peut ne pas exister au sein d'un système.

Dans le cas du sous-système 1 dans son ensemble, $y^{1 \leftarrow 2}$ représente le vecteur de conditions aux limites d'entrée imposé par le sous-système voisin.

Le séparateur de phase est le dispositif dans lequel est séparé, par gravité, le fluide caloporteur liquide du fluide caloporteur gazeux. Un séparateur de phase peut être représenté par le schéma synoptique de la figure 3. En utilisant les notations de la figure 3, on écrit les variables d'entrée non commandable, de sortie, et d'états sous forme de vecteurs en respectant la notation introduite par la figure 2 (l'exposant *PS* sera utilisé pour rappeler le séparateur de phase):

$$w^{ps} = \begin{pmatrix} M_{in}^L \\ M_{in}^G \\ P_{in}^C \end{pmatrix}, \qquad y^{ps} = \begin{pmatrix} h \\ M_{out}^G \\ T_{out}^C \\ P_{out}^C \end{pmatrix}, \qquad x^{ps} = h \qquad\qquad (1)$$

Les relations algébriques ou différentielles reliant ces différentes variables sont explicitées plus bas. Il pourra être remarqué que tous les paramètres utilisés dans les équations décrites ont un sens physique et peuvent être trouvés dans des documentations techniques du composant.

Il doit être remarqué que la pression qui règne dans le séparateur de phase n'est pas une variable calculée (elle n'est pas composante du vecteur d'état $x^{ps}$), mais imposée par un autre sous-système via la condition limite d'entrée $P_{in}^C$. Ainsi, en terme de pression, ce sous-système se contente de transmettre à un sous-système voisin (via la condition à la limite de sortie $P_{out}^C$) la pression qu'il a reçue d'un sous-système voisin (via sa condition à la limite d'entrée en pression $P_{in}^C$ ).

La vanne de détente est un sous-système qui permet de liquéfier une partie du gaz déjà froid la traversant.

En utilisant les notations de la figure 4, on écrit les variables d'entrée non commandables, d'entrées commandables et de sorties sous forme de vecteurs en respectant la notation introduite par la figure 2 (l'exposant vjt sera utilisé pour rappeler la vanne Joule-Thompson):

$$w^{vjt} = \begin{pmatrix} T_{in}^H \\ P_{in}^H \\ P_{in}^C \end{pmatrix}, \quad u^{vjt} = POS \quad y^{vjt} = \begin{pmatrix} M_{out}^H \\ M_{out}^G \\ M_{out}^L \end{pmatrix} \quad (2)$$

Les équations liant ces différentes variables sont décrites plus bas. Tous les paramètres utilisés sont des paramètres physiques. Il s'agit d'équations algébriques traitées comme dans l'existant.

L'échangeur de chaleur à contre-courant est le dispositif chargé de récupérer les frigories du gaz le plus froid, pour les transmettre au gaz le plus chaud. Il est représenté par le schéma synoptique de la figure 5. En utilisant les notations de la figure 5, on écrit les variables d'entrée non commandables et de sortie sous forme de vecteurs en respectant la notation introduite par la figure 2. L'exposant *ex* est utilisé pour rappeler l'échangeur de chaleur.

$$w^{ex} = \begin{pmatrix} T_{in}^H \\ T_{in}^C \\ M_{in}^H \\ M_{in}^C \\ P_{in}^H \\ P_{in}^C \end{pmatrix}, \quad y^{ex} = \begin{pmatrix} T_{out}^H \\ T_{out}^C \\ M_{out}^H \\ M_{out}^C \\ P_{out}^H \\ P_{out}^C \end{pmatrix} \quad (3)$$

Les équations algébriques ou différentielles liant ces différentes variables sont explicitées plus bas. Il pourra être remarqué que tous les paramètres utilisés dans les équations décrites ont un sens physique et peuvent être trouvés dans des documentations techniques du composant.

Nous pouvons remarquer que contrairement à ce qui est connu de l'art antérieur, les conditions aux limites de sortie $P_{out}^C$ et $P_{out}^H$ sont fonction des conditions aux limites d'entrée en pressions $P_{in}^C$ et $P_{in}^H$ et en débits $M_{in}^C$ et $M_{in}^H$. Les débit sortants $M_{out}^C$ et $M_{out}^H$ ne sont pas générés par la différence de pression mais simplement imposés par les conditions aux limites d'entrée $M_{in}^C$ et $M_{in}^H$. En résumé, la chute de pression dans l'échangeur est considérée comme une conséquence du passage d'un fluide, et non l'inverse.

En inter-connectant ou en combinant les modèles des trois sous-systèmes (en reliant toutes les conditions aux limites des sous-systèmes: les sorties sur les entrées, les connexions sont celles décrites par la figure 1), il devient alors possible d'obtenir un modèle d'état sous la forme:

$$\dot{x}^1 = f^1(x^1, u^1, w^1, y^{1\leftarrow 2}) \quad (4a)$$

$$y^1 = g^1(x^1) \quad (4b)$$

dans lequel $x^1$ représente l'état du système, $u^1$ le vecteur d'entrée commandable, $w^1$ le vecteur d'entrée non commandable et $y^{1\leftarrow 2}$ le vecteur d'entrée reçu du système voisin.

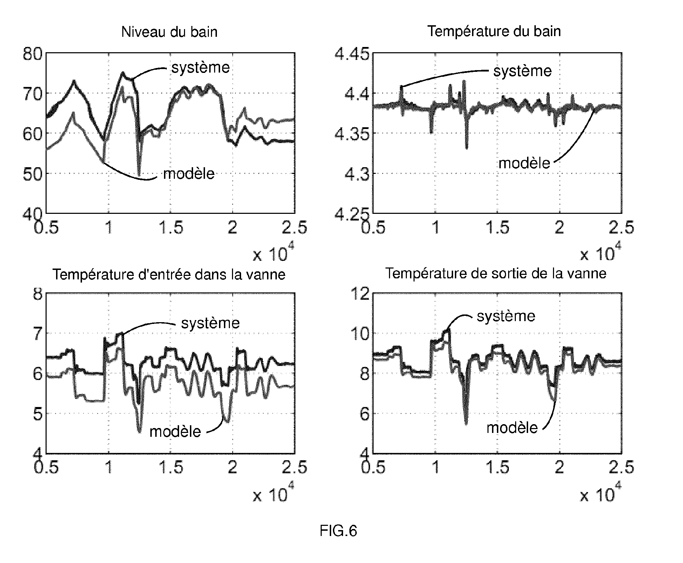

Les modèles déterminés sont pertinents dans une stratégie de commande et/ou d'observation. Il ne reste plus qu'à s'assurer que les principales dynamiques sont bien prises en compte par le modèle. Pour cela, on compare ce que renvoie le modèle si on le soumet aux même conditions aux limites qu' un système concret existant. La figure 6 présente l'évolution de quelques variables clef du système. Les données mesurées sur le système réel portent la mention « système » et les données obtenues par simulation à partir du modèle portent la mention « modèle ».

Nous pouvons voir sur cette figure que les principales dynamiques du système ont été correctement prises en compte par le modèle.

Maintenant que le système est modélisé, il faut obtenir un état de fonctionnement stationnaire, indispensable pour la synthèse du gain de l'observateur.

Pour ce faire, on cherche à annuler tous les vecteurs $\dot{x}^{PS}$, $\dot{x}^{JT}$ et $\dot{x}^{EX}$. Pour cela, on impose les sorties $P_{out}^C$, $P_{out}^H$ et $T_{out}^H$ du sous-système voisin (non représenté), ainsi que l'ouverture POS de la vanne 3, puis on itère sur la puissance dissipée dans le séparateur de phase, jusqu'à l'annulation des vecteurs $\dot{x}^{PS}$, $\dot{x}^{JT}$ et $\dot{x}^{EX}$.

Une fois qu'un état stationnaire a été trouvé, on extrait le comportement linéarisé du système, autour de ce point de fonctionnement. On cherche donc à obtenir, en partant des équations (4a, 4b), un modèle linéarisé sous la forme:

$$\dot{\tilde{x}}^1 = A\tilde{x}^1 + \begin{bmatrix} B^1 & B^1 & B^{1\leftarrow 2} \end{bmatrix} \begin{pmatrix} \tilde{u}^1 \\ \tilde{w}^1 \\ \tilde{y}^{1\leftarrow 2} \end{pmatrix} \tag{5a}$$

$$\tilde{y}^1 = C^1 \tilde{x}^1 \tag{5b}$$

Une telle forme s'obtient en appliquant la méthodologie décrite plus bas.

Nous disposons maintenant d'un équivalent linéaire au modèle d'état. On peut donc dès lors utiliser les théories s'appliquant à un tel système, et notamment construire un observateur.

L'observateur de charge thermique peut être utilisé sur un autre système, notamment sur le deuxième mode de réalisation de système décrit plus haut en référence à la figure 7.

L'observateur peut ensuite être utilisé pour observer une charge thermique en se basant sur le modèle décrit précédemment. Pour rappel, même si nous disposons dans le bain de fluide caloporteur d'un dispositif dissipatif pouvant simuler une charge thermique, celle-ci est en fait imprévisible et inconnue.

Pour cela, rappelons les équations (5a, 5b), la notation du modèle d'état du cycle Joule-Thompson, linéarisé autour d'un point d'équilibre:

$$\dot{\tilde{x}}^1 = A\tilde{x}^1 + \begin{bmatrix} B^1 & B^1 & B^{1\leftarrow 2} \end{bmatrix} \begin{pmatrix} \tilde{u}^1 \\ \tilde{w}^1 \\ \tilde{y}^{1\leftarrow 2} \end{pmatrix} \tag{6a}$$

$$\tilde{y}^1 = C^1 \tilde{x}^1 \tag{6b}$$

Comme déjà énoncé, certaines composantes du vecteur $\tilde{w}^1$ ne sont pas mesurée (dont la charge thermique). Egalement, certaines conditions aux limites $\tilde{y}^{1\leftarrow 2}$ imposées par le sous-système précédent ne sont pas non plus mesurées, et ont une influence majeure sur le fonctionnement. Nous utilisons désormais une nouvelle notation pour le modèle d'état du sous-système, avec en lieu et place des vecteurs $\tilde{w}^1$ et $\tilde{y}^{1\leftarrow 2}$, deux vecteurs d'entrée non commandables, l'un mesuré, l'autre non. Le système se réécrit alors:

$$\dot{\tilde{x}}^1 = A\tilde{x}^1 + \begin{bmatrix} B^1 & B_m^1 & B_{um}^1 \end{bmatrix} \begin{pmatrix} \tilde{u}^1 \\ \tilde{w}_{mes}^1 \\ \tilde{w}_{umes}^1 \end{pmatrix} \tag{7a}$$

$$\tilde{y}^1 = C^1 \tilde{x}^1 \tag{7b}$$

$w_{mes}^1$ étant le vecteur concaténant les composantes mesurées, $w_{umes}^1$ les composantes non-mesurées. Le vecteur de composantes non mesurées est défini comme une composante de l'état du système. Le système augmenté s'écrit

alors:

$$\begin{pmatrix} \dot{\tilde{x}}^1 \\ \dot{\tilde{w}}_{um}^1 \end{pmatrix} = \underbrace{\begin{bmatrix} A^1 & B_{um}^1 \\ 0 & 0 \end{bmatrix}}_{A_{aug}^1} \underbrace{\begin{pmatrix} \tilde{x}^1 \\ \tilde{w}_{um}^1 \end{pmatrix}}_{\xi^1} + \underbrace{\begin{bmatrix} B^1 & B_m^1 \\ 0 & 0 \end{bmatrix}}_{B_{aug}^1} \underbrace{\begin{pmatrix} \tilde{u}^1 \\ \tilde{w}_m^1 \end{pmatrix}}_{\mu^1} \qquad (8a)$$

$$\tilde{y}^1 = \underbrace{\begin{bmatrix} C^1 & 0 \end{bmatrix}}_{C_{aug}^1} \begin{pmatrix} \tilde{x}^1 \\ \tilde{w}_{um}^1 \end{pmatrix} \qquad (8b)$$

soit sous forme compacte :

$$\dot{\xi}^1 = A_{aug}^1 \xi^1 + B_{aug}^1 \mu^1 \qquad (9a)$$

$$\tilde{y}^1 = C_{aug}^1 \xi^1 \qquad (9b)$$

Le système résultant est un système linéaire invariant, pour lequel il existe un estimateur de Kalman obtenu en résolvant l'équation de Riccati (sous l'environnement de développement MatLab, nous pourrons utiliser la commande $L^1 = lqr(A_{aug}^1{}^T, C_{aug}^1{}^T, Q^1, R^1)^T$ dans laquelle $Q^1$ and $R^1$ sont des matrices de pondération). La matrice d'observabilité de ce système est de plein rang: chacun des états non mesuré est estimable grâce au vecteur de mesures.

On obtient donc un terme de correction $L^1$ qu'il reste à utiliser. Parmi plusieurs modes de mise en oeuvre, deux sont particulièrement intéressants, l'observateur linéaire et l'observateur non-linéaire.

Le terme de correction $L^1$ est utilisé sur le modèle d'état étendu défini par les équations (8a, 8b). L'équation différentielle permettant de remonter aux charges thermiques dissipées dans le bain s'exprime ainsi:

$$\dot{\hat{\xi}}^1 = (A_{aug}^1 - L^1 C_{aug}^1)\hat{\xi}^1 + B_{aug}^1 \mu_{exp}^1 + L^1 y_{exp}^1 \qquad (10)$$

dans laquelle $\mu_{exp}^1$ et $y_{exp}^1$ représentent les données de mesures provenant de l'expérience.

On peut observer le résultat d'une telle stratégie d'observation sur une expérience ayant eu lieu sur la machine.

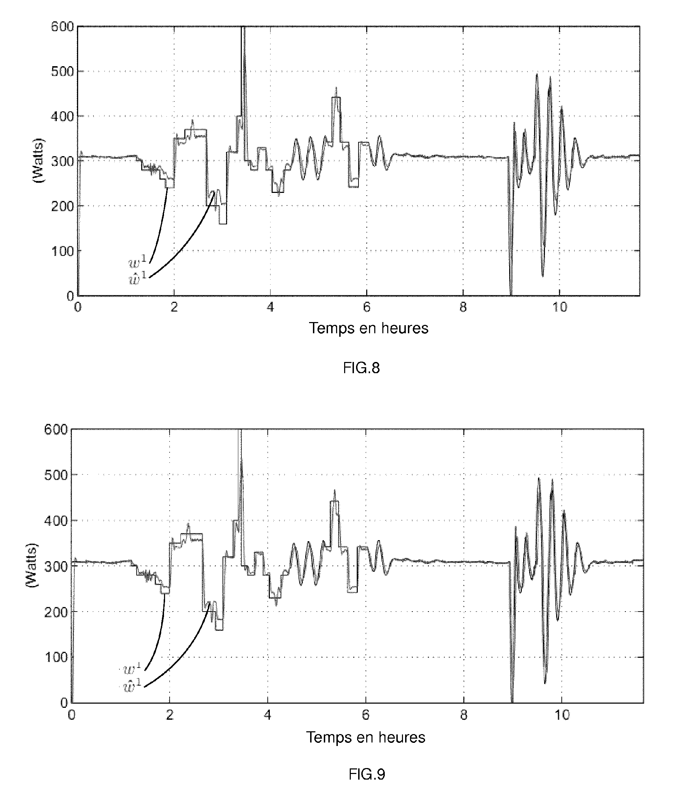

La quantité de chaleur par unité de temps qui s'applique sur le bain valeur est *a priori* inconnue, mais le système d'essais possède un dispositif de chauffage ayant le même effet. Il est donc possible de comparer le résultat d'observation à la valeur réellement appliquée. La figure 8 présente un résultat, la courbe référencée $w^1$ représentant la puissance apportée par le dispositif de chauffage et la courbe référencée $\hat{w}^1$ représentant la puissance estimée par l'observation linéaire. Nous pouvons constater que sur cette figure, la charge thermique simulée par le dispositif de chauffage est correctement estimée autour du point de fonctionnement. En revanche, si le système s'écarte beaucoup de son point de fonctionnement initial, l'observateur renvoie un écart systématiquement minoré. Une seconde structure d'observation, basée sur la connaissance complète (et plus seulement linéarisée) du modèle est donc mise en place.

On va maintenant utiliser le gain de correction $L^1$ sur le modèle non-linéaire énoncé par les équations (4a, 4b). Le terme de correction $L^1$ est donc utilisé sur la version étendue de la fonction $f^1$, appelé $\bar{f}^1$, selon la définition de l'état étendu donnée par les équations (8a, 8b). Ainsi, l'observateur s'exprime grâce à l'équation différentielle suivante:

$$\dot{\hat{\xi}}^1 = \bar{f}^1(\hat{\xi}^1, \mu_{exp}^1) - L(y_{exp}^1 - g'(\hat{\xi}^1, \mu_{exp}^1)) \qquad (11)$$

$y_{exp}^1$ et $\mu_{exp}^1$ représentent les données arrivant de l'expérience. Nous rappelons que $y_{exp}^1$ concatène les mesures tandis que $\mu_{exp}^1$ représente les conditions aux limites mesurées (incluant la commande).

Après mise en oeuvre de l'observateur, nous nous concentrons sur le résultat d'observation de la quantité de chaleur par unité de temps qui s'applique sur le bain. La figure 9 présente les résultats. Nous pouvons constater que sur cette figure, la charge thermique simulée par le dispositif de chauffage est correctement estimée. La courbe référencée $w^1$ représente la puissance apportée par le dispositif de chauffage et la courbe référencée $\hat{w}^1$ représente la puissance estimée par l'observation linéaire.

Modélisations des sous-systèmes :

Un but de l'invention est de diminuer le nombre d'états du système pris en compte afin de faciliter le réglage et l'exécution de la commande ou, autrement dit, de diminuer le nombre d'équations différentielles utilisées dans le modèle.

En utilisant les notations introduites par la figure 3, le comportement dynamique du sous-système est exprimé. La quantité de masse de liquide présente dans le séparateur de phase s'écrit:

$$M^L = \rho^L \cdot S \cdot h \qquad (12)$$

où $\rho^L$, $S$ et $h$ sont respectivement la densité du fluide, l'aire de la section horizontale du réservoir du séparateur et la hauteur du niveau de fluide liquide dans le réservoir. Par dérivation de l'équation (12) par rapport au temps, il vient:

$$\dot{h} = \frac{\dot{M}^L - \dot{\rho}^L \cdot S \cdot h}{\rho^L \cdot S} \qquad (13)$$

Et avec le principe de conservation de la masse:

$$\dot{M}^L = M_{in}^L - M^{vap} \qquad (14)$$

La quantité de fluide vaporisé est égale à:

$$M^{vap} = \frac{\dot{Q}}{L_v} \qquad (15)$$

où $\dot{Q}$ (simulée dans l'exemple) et $L_v$ correspondent à la charge thermique appliquée dans le bain de fluide et la chaleur latente de vaporisation du fluide.

En supposant que les variations de densité peuvent être négligées dans le cas d'une faible variation de pression et en combinant les équations (13), (14), (15), on arrive à :

$$\dot{h} = \frac{M_{in}^L - \dfrac{\dot{Q}}{L_v}}{\rho^L \cdot S} \qquad (16)$$

avec une approche similaire, la quantité de gaz dans le réservoir peut être exprimée comme suit :

$$M^G = \rho^G \cdot S \cdot (h_{max} - h) \qquad (17)$$

dans laquelle $h_{max}$ est la hauteur de fluide liquide dans le réservoir. Par dérivation de l'équation (17) par rapport au temps, on obtient:

$$\dot{M}^G = \dot{\rho}^G \cdot S \cdot (h_{max} - h) - \rho^G \cdot S \cdot \dot{h} \qquad (18)$$

Et avec le principe de conservation de la masse:

$$\dot{M}^G = M_{in}^G + M^{vap} - M_{out}^C \qquad (19)$$

Finalement, en combinant les équations (17), (18) et (19), on obtient:

$$M_{out}^C = M_{in}^G + \frac{\dot{Q}}{L_v} - \rho^G \cdot S \cdot (h - h_{max}) + \frac{\rho^G}{\rho^L} \left( M_{in}^L - \frac{\dot{Q}}{L_v} \right) \qquad (20)$$

La température du flux sortant, sous hypothèse de saturation de vapeur, est donnée algébriquement par Hepack© (logiciel de la société CRYODATA):

$$T_{out}^C = f(P_{in}^C) \qquad (21)$$

La pression de sortie est considérée égale à la pression d'entrée

$$P_{out}^C = P_{in}^C \qquad (22)$$

Selon les conditions aux limites $T_{in}^H$, $T_{in}^C$, $M_{in}^H$, $M_{in}^C$, $P_{in}^H$ et $P_{in}^C$ représentées à la figure 5, le modèle de l'échangeur définit la température de sortie $T_{out}^H$ et $T_{out}^C$, les pressions $P_{out}^H$ et $P_{out}^C$, les débits $M_{out}^H$ et $M_{out}^C$. Le modèle est établi en utilisant les hypothèses suivantes:

- Les pressions sont suposées décroître linéairement dans les conduites,
- Les débits sont supposés constants dans les conduites,
- La conductivité longitudinale et la chaleur spécifique de l'aluminium sont supposées négligeables.

Dans le but d'exprimer la dérivée de la température relativement au temps seulement, une discrétisation spatiale doit être réalisée, en utilisant un nombre fini de zones élémentaires comme représenté à la figure 10. Sur cette figure, $T_i^H$ et $T_j^C$ sont les températures au niveau des zones $i$ et $N-i+1$. $\dot{Q}_i$ représente les flux de chaleur dans chacune des zones. $T_0^H$ est égal à $T_{in}^H$ et $T_0^C$ est égal à $T_{in}^C$.

Chaque zone est traversée par deux flux, en couplage thermique l'un avec l'autre. Le comportement dynamique de la zone $i$ peut être décrit par le système d'équations différentielles suivant:

$$\frac{\rho_i^H C p_i^H V^H}{N} \dot{T}_i^H = M^H C p_i^H (T_{i-1}^H - T_i^H) - \dot{Q}_i \tag{23a}$$

$$\frac{\rho_j^C C p_j^C V^C}{N} \dot{T}_j^C = M^C C p_j^C (T_{j-1}^C - T_j^C) + \dot{Q}_i \tag{23b}$$

$$\dot{Q}_i = \frac{kS\Delta T_M}{N}, \quad j = N - i + 1 \tag{23c}$$

où $\rho$ et $C_p$ sont les propriétés du fluide caloporteur, V est le volume de fluide gazeux contenu dans l'échangeur, $S$ est la surface d'échange et $k$ le coefficient global de transfert thermique. $\Delta T_M$ est la différence moyenne de température entre le fluide chaud et le fluide froid.

Selon les hypothèses de modélisation mentionnées ci-dessus, les débits sortants sont égaux aux débits entrant:

$$M_{out}^H = M_{in}^H = M^H, \quad M_{out}^C = M_{in}^C = M^C \tag{24}$$

Les pressions de sortie peuvent être modélisées par:

$$P_N^H = P_0^H - K^H \cdot M^{H2}, \quad P_N^C = P_0^C + K^C \cdot M^{C2} \tag{25}$$

où $K^H$ et $K^C$ sont les coefficients de chutes de pression dues aux frottements.

Dans la suite, le modèle dynamique de l'échangeur est exprimé en utilisant la forme compacte:

$$\dot{x}^{ex} = f^{ex}(x^{ex}, w^{ex}) \tag{26a}$$

$$y^{ex} = g^{ex}(x^{ex}, w^{ex}) \tag{26b}$$

Selon les conditions aux limites mentionnées à la figure 4, le modèle de la vanne de détente de type Joule-Thompson exprime le débit $M_{out}^H$ au travers de la vanne et $\chi$ le titre massique du mélange. La commande de la vanne est appelée *POS*. Comme pour toute autre vanne de commande, le flux $M_{out}^H$ à travers la vanne peut être exprimé par:

$$M_{out}^H = 2.4 \cdot 10^{-5} \cdot C_v \cdot \left(1 - \frac{X}{3 \cdot X_c}\right)\sqrt{\rho \cdot P_{in}^H \cdot X} \tag{27a}$$

$$C_v = \frac{Cv_{max}}{R_v}\left(\exp\left(\frac{POS}{100}\log R_v\right) - \left(1 - \frac{POS}{100}\right)\right) \tag{27b}$$

$$X = min\left(\frac{P_{in}^H - P_{in}^C}{P_{in}^H}, X_c\right), \quad X_c = \frac{\gamma}{1.4} X_t \tag{27c}$$

où $\gamma$ est le rapport entre la capacité thermique à pression constante et la capacité thermique à volume constant et p la densité du fluide, tous deux sous pression $P_{in}^H$ et température $T_{in}^H$. $X_t$ est une constante donnée par le constructeur de la vanne. $R_v$ et $Cv_{max}$ sont des constantes de dimensionnement de la vanne, respectivement le rapport entre les débits maximal et minimal permis par la vanne (en anglais rangeability) et le coefficient de flux, X et Xc étant des rapports de pressions.

Une partie du flux gazeux exprimé dans les équations (27a, 27b et 27c) est liquéfiée pendant la détente. En supposant une détente isenthalpique à l'équilibre gaz-liquide, on peut écrire:

$$H_{in} = H_{out} = \chi \cdot H_{out}^G + (1 - \chi) \cdot H_{out}^L \qquad (28)$$

où $H_{in}$ et $H_{out}$ sont les enthalpies avant et après les détentes; $H_{out}^G$ et $H_{out}^L$ sont les enthalpies du gaz saturé et du liquide. En conséquence, le rapport de phases dans le mélange peut s'écrire:

$$\chi = \frac{H_{in} - H_{out}^L}{H_{out}^G - H_{out}^L} \qquad (29)$$

Finalement, les flux de gaz et de liquide sortants peuvent s'écrire:

$$M_{out}^G = (1 - \chi) \cdot M_{out}^H, \qquad M_{out}^L = \chi \cdot M_{out}^H \qquad (30)$$

Par la suite, le modèle de la vanne est écrit sous forme compacte:

$$y^{vjt} = f(u^{vjt}, w^{vjt}) \qquad (31)$$

Il est ici rappelé les notations et la méthodologie pour linéariser un système dynamique autour d'un point de fonctionnement. Pour cela, on commence par énoncer un système non-linéaire générique:

$$\dot{x} = f(x, u) \qquad (32a)$$

$$y = g(x, u) \qquad (32b)$$

dans lequel x représente l'état du système, *u* l'entrée commandable et *y* les sorties mesurées. On cherche à identifier le modèle linéaire autour d'un point de fonctionnement, lequel se caractérise par:

$$\dot{x} = 0 = f(x_0, u_0) \qquad (33a)$$

$$y = y_0 = g(x_0, u_0) \qquad (33b)$$

Rappelons l'identité de Taylor, limitée au premier ordre. Soit une fonction h de deux variables, *p* et *q*. Son développement autour de $p_0$ et $q_0$ s'écrit:

$$h(p,q)|_{p_o,q_o} = h(p_o,q_o) + (p - p_o)\frac{\partial h(p,q)}{\partial p}\bigg|_{p=p_o,q=q_o} + (q - q_o)\frac{\partial h(p,q)}{\partial q}\bigg|_{p=p_o,q=q_o} \tag{34}$$

En définissant maintenant les variables d'écart:

$$\tilde{x} = x - x_0, \qquad \tilde{u} = u - u_0, \qquad \tilde{y} = y - y_0 \tag{35}$$

Ainsi, en appliquant l'équation (34) sur le système d'équation (32a, 32b) et en utilisant la notation introduite par l'équation (35), il est obtenu:

$$\dot{\tilde{x}} = A\tilde{x} + B\tilde{u} \tag{36a}$$

$$\tilde{y} = C\tilde{x} + D\tilde{u} \tag{36b}$$

avec :

$$A = \frac{\partial f(x,u)}{\partial x}\bigg|_{x_o,u_o} \quad B = \frac{\partial f(x,u)}{\partial u}\bigg|_{x_o,u_o}$$
$$C = \frac{\partial g(x,u)}{\partial x}\bigg|_{x_o,u_o} \quad D = \frac{\partial f(x,u)}{\partial u}\bigg|_{x_o,u_o} \tag{37}$$

Dans certains cas, le calcul formel de (37) peut se révéler délicat, ou inutile : il sera alors admis l'approximation suivante:

$$\frac{\partial f(x)}{\partial x}\bigg|_{x_o} = \frac{\Delta f(x)}{\Delta x}\bigg|_{x_o} = \frac{f(x_0 + h) - f(x_0 + h)}{h} \tag{38}$$

Cette approximation est justifiée puisque, par définition :

$$\frac{\partial f(x)}{\partial x}\bigg|_{x_o} = \lim_{h \to 0} \frac{f(x_0 + h) - f(x_0)}{h} \tag{39}$$

Il suffira de choisir *h* suffisamment petit pour que l'approximation soit validée.

L'invention concerne encore un procédé de configuration du dispositif de commande 6 du système thermodynamique 1, en particulier thermohydraulique, notamment du système de cryoréfrigérateur. Le procédé comprend les phases suivantes :

- Mise en oeuvre du procédé de détermination du modèle du système ;
- Génération d'un observateur en utilisant le modèle déterminé dans la phase précédente.

Cet observateur est ensuite implémenté dans le dispositif de commande.

L'invention concerne encore un procédé de commande du système thermodynamique 1, en particulier thermohydraulique, notamment du système de cryoréfrigérateur. Le procédé comprend l'utilisation d'un observateur généré par la mise en oeuvre du procédé de configuration.

Notamment, par « première condition aux limites reliée à une deuxième condition aux limite », on entend par exemple que la première condition aux limites est déterminée par la deuxième condition aux limites ou que la deuxième condition aux limites est déterminée par la première condition aux limites.

**Revendications**

1. Procédé de configuration d'un dispositif de commande (6) d'un système thermodynamique (1), en particulier thermohydraulique, notamment d'un système de cryoréfrigérateur, comprenant les phases suivantes :

   • Mise en oeuvre d'un procédé de détermination d'un modèle du système thermodynamique, comprenant une décomposition du système en sous-systèmes (2, 3, 4, 5 ; 21, 31, 41, 32, 42) ayant chacun des conditions aux limites, tel que:

   - des conditions aux limites de sortie, respectivement d'entrée, d'un sous-système sont reliées à des conditions aux limites d'entrée, respectivement de sortie, d'un sous-système voisin,
   - les conditions aux limites portent au moins sur une quantité de fluide par unité de temps et sur un couple de grandeurs physiques définissant l'état thermodynamique du fluide;

   • Génération d'un observateur en utilisant le modèle déterminé dans la phase précédente.

2. Procédé de configuration selon la revendication précédente, **caractérisé en ce que** le couple de grandeurs physiques comprend la température du fluide et/ou la pression du fluide.

3. Procédé de configuration selon la revendication 1 ou 2, **caractérisé en ce qu'**on utilise des modèles physiques des sous-systèmes basés sur le fonctionnement de chaque sous-système.

4. Procédé de configuration selon l'une des revendications précédentes, **caractérisé en ce qu'**on met en oeuvre une étape de linéarisation des modèles physiques des sous-systèmes.

5. Procédé de configuration selon l'une des revendications précédentes, **caractérisé en ce qu'**on met en oeuvre une étape d'initialisation des modèles physiques des sous-systèmes à un point de fonctionnement du système, notamment à un point de fonctionnement stationnaire du système.

6. Procédé de configuration selon l'une des revendications précédentes, **caractérisé en ce qu'**on met en oeuvre une étape de détermination du modèle du système par combinaison des modèles des sous-systèmes.

7. Procédé de commande d'un système thermodynamique (1), en particulier thermohydraulique, notamment d'un système de cryoréfrigérateur, comprenant l'utilisation d'un observateur généré par mise en oeuvre du procédé selon la revendication précédente.

8. Support d'enregistrement (62) lisible par un processeur (61) sur lequel sont enregistrées des données définissant un modèle d'un système thermodynamique (1 ; 11), en particulier thermohydraulique, notamment d'un système de cryoréfrigérateur, le modèle étant obtenu par mise en oeuvre du procédé selon l'une des revendications précédentes.

9. Dispositif de commande (6) d'un système thermodynamique (1), en particulier thermohydraulique, notamment d'un système de cryoréfrigérateur, comprenant des éléments (61, 62) matériels et/ou logiciels d'utilisation d'un modèle obtenu par la mise en oeuvre du procédé selon l'une des revendications 1 à 7.

10. Dispositif selon la revendication précédente, **caractérisé en ce que** les moyens matériels et/ou logiciels comprennent des éléments matériels et/ou logiciels de détermination d'au moins une commande par utilisation d'un modèle obtenu par la mise en oeuvre du procédé selon l'une des revendications 1 à 7.

11. Dispositif selon l'une des revendications précédentes, **caractérisé en ce que** les moyens matériels et/ou logiciels comprennent un support d'enregistrement (62) selon la revendication 8, comme une mémoire.

12. Système thermodynamique (1 ; 11), en particulier thermohydraulique, notamment système de cryoréfrigérateur, comprenant un dispositif de commande (6) selon l'une des revendications 9 à 11.

1

$T_{in}^C, M_{in}^C, P_{out}^C$          $T_{out}^H, M_{in}^H, P_{out}^H$

$T_{out}^C, M_{out}^C, P_{in}^C$          $T_{in}^H, M_{out}^H, P_{in}^H$

2          $NEF_1$

$T_{in}^C, M_{in}^C, P_{out}^C$          $T_{out}^H, M_{in}^H, P_{out}^H$

$T_{in}^H, M_{out}^H, P_{in}^H$

$CV_{155}$          POS          3

$M_{out}^L, M_{out}^G, P_{in}^C$

$T_{out}^C, M_{out}^C, P_{in}^C$          $M_{in}^L, M_{in}^G, P_{out}^C$

4

$\dot{Q}$          $h$

$NS_1$

FIG.1

$u^1$

$w^1$          $\dot{x}^1 = f^1(x^1, u^1, w^1, y^{1\leftarrow 2})$          $y^1$

$y^{1\leftarrow 2}$          $y^1 = g^1(x^1)$

FIG.2

EP 2 759 784 A1

FIG.3

FIG.4

FIG.5

Niveau du bain

Température du bain

Température d'entrée dans la vanne

Température de sortie de la vanne

FIG.6

FIG.7

FIG.8

FIG.9

Hot Input
$T_{in}^H, P_{in}^H, M_{out}^H$

$\dot{Q}_1$  $\cdots$  $\dot{Q}_i$  $\cdots$  $\dot{Q}_{N-1}$  $\dot{Q}_N$

Hot Output
$T_{out}^H, P_{out}^H, M_{in}^H$

$T_0^H$  $T_1^H$  $\cdots$  $T_i^H$  $\cdots$  $T_{N-1}^H$  $T_N^H$

Cold Output
$T_{out}^C, P_{in}^C, M_{out}^C$

Cold Input
$T_{in}^C, P_{out}^C, M_{in}^C$

$T_N^C$  $T_{N-1}^C$  $\cdots$  $T_j^C$  $\cdots$  $T_1^C$  $T_0^C$

FIG.10

FIG.11

Europäisches
Patentamt

European
Patent Office

Office européen
des brevets

# RAPPORT DE RECHERCHE EUROPEENNE

Numéro de la demande

EP 14 15 2692

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 647 677 A1 (SIEMENS AG [DE]) 19 avril 2006 (2006-04-19) * le document en entier * ----- | 1-12 | INV. F25B9/00 F25B49/02 G05B17/00 |
| A | US 2012/055664 A1 (BORNARD GUY [FR] ET AL) 8 mars 2012 (2012-03-08) * le document en entier * ----- | 1-12 | G05B17/02 |
| A | DESCHILDRE C ET AL: "DYNAMIC SIMULATION OF AN HELIUM REFRIGERATOR", ADVANCES IN CRYOGENIC ENGINEERING: TRANSACTIONS OF THE CRYOGENIC ENGINEERING CONFERENCE - CEC, AIP, US, vol. 53, 16 mars 2008 (2008-03-16), pages 475-482, XP007915630, ISBN: 978-0-7354-0504-2 [extrait le 2010-11-04] * le document en entier * ----- | 1-12 | |

| | | | DOMAINES TECHNIQUES RECHERCHES (IPC) |
|---|---|---|---|
| | | | F25B G05B |

Le présent rapport a été établi pour toutes les revendications

| Lieu de la recherche | Date d'achèvement de la recherche | Examinateur |
|---|---|---|
| Munich | 17 mars 2014 | Lucic, Anita |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 2692

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2014

| Document brevet cité au rapport de recherche | | Date de publication | Membre(s) de la famille de brevet(s) | | Date de publication |
|---|---|---|---|---|---|
| EP 1647677 | A1 | 19-04-2006 | AUCUN | | |
| US 2012055664 | A1 | 08-03-2012 | EP | 2411745 A1 | 01-02-2012 |
| | | | FR | 2943768 A1 | 01-10-2010 |
| | | | JP | 2012521535 A | 13-09-2012 |
| | | | US | 2012055664 A1 | 08-03-2012 |
| | | | WO | 2010109091 A1 | 30-09-2010 |

EPO FORM P0460

Pour tout renseignement concernant cette annexe : voir Journal Officiel de l'Office européen des brevets, No.12/82

**EP 2 759 784 A1**

**Documents brevets cités dans la description**

- FR 2943768